# EUROPEAN PATENT SPECIFICATION

(11) **EP 2 044 568 B1**
(45) Date of publication and mention of the grant of the patent: **15.04.2015**
(21) Application number: 07840293.0
(22) Date of filing: 27.06.2007
(51) Int. Cl.: H04K 1/00, H04L 9/00

(54) **METHOD AND APPARATUS FOR SECURELY MOVING AND RETURNING DIGITAL CONTENT**
VERFAHREN UND VORRICHTUNG ZUR SICHEREN BEWEGUNG UND RÜCKFÜHRUNG DIGITALER INHALTE
PROCÉDÉ ET APPAREIL POUR DÉPLACER ET RENVOYER DE MANIÈRE SÉCURISÉE UN CONTENU NUMÉRIQUE

(30) Priority: 13.07.2006 US 457219
(43) Date of publication of application: 08.04.2009
(73) Proprietor: Motorola Mobility LLC, Libertyville, IL 60048 (US)
(72) Inventor: MORONEY, Paul, Olivenhain, California 92024 (US); MEDVINSKY, Alexander, San Diego, California 92129 (US)
(74) Representative: Hollos, Andrew James
(86) International application number: PCT/US2007/072174
(87) International publication number: WO 2008/008621

(56) References cited:
- FR-A1- 2 867 868
- US-A- 6 141 753
- US-A1- 2002 080 964
- US-A1- 2003 202 679
- US-A1- 2004 030 898
- US-A1- 2005 021 985
- US-A1- 2005 036 615
- US-B1- 6 490 681
- US-B1- 6 809 792
- US-B1- 6 978 370

## Description

### BACKGROUND OF THE INVENTION

### Field of the Invention

Embodiments of the present invention generally relate to copy management systems that utilize digital rights management functions for communicating content. More specifically, the present invention relates to a method and apparatus for securely moving and returning digital content.

### Description of the Related Art

Digital content data has recently gained wide acceptance in the public. Such digital content data includes, but is not limited to: movies, videos, music, and the like. Consequently, many consumers and businesses employ various digital media devices or systems that enable the reception of such digital multimedia content via different communication channels (e.g., a wireless satellite link, a wired cable connection, etc.). Similarly, many consumers and businesses utilize a copy management system to transport the digital content data in a secure fashion.

Many copy management systems currently support the notion of "copy once" permission, where copying incoming digital content on a home personal video recorder (PVR) is allowed so long as no further copy of the now stored content is made. In addition to streaming and playback, these copy management systems also typically permit a "secure move" functionality that enables the "copy once" content to be transferred to another device. Namely, the PVR is capable of transferring the stored digital content to another player device within a home network (e.g., devices within proximity of the PVR) or device owned and/or registered by the user. Often, such player devices typically support reduced memory, or displays characterized by reduced resolution. In one scenario, a portable video player (PVP) with a standard definition display and internal memory is capable of acquiring digital content from a PVR so long as the copy on the PVR is deleted or disabled.

Consequently, the PVR transcodes the stored content to a lower resolution or lower quality (that is, a lower bitrate, thereby requiring less memory to store) so that the PVP device is able to accept, store, and later play back the content. Despite the mobility and flexibility afforded, however, the digital content subscriber may be reluctant to utilize this service, since the digital content will now be in a lower resolution version. Any future secure move back to the original PVR device would only move this lower resolution or lower quality version (e.g., the original HD resolution will be lost)

FR 2 867 868 A1 discloses a method that involves generating a sub-key KP relative to a user and/or a system, and generating a sub-key KE depending on a secret encryption key K and the sub-key KP. The secret encryption key is dynamically dearchived from the sub-keys at each usage of programs or data. The protected programs or data are dynamically decrypted in an electrically erasable programmable ROM by a decryption algorithm and the key K.

Thus, there is a need in the art for a more effective method and apparatus for securely moving lower resolution or lower quality copies, and then restoring the original high-resolution or high-quality versions on any subsequent secure move "back," thus re-enabling the original disabled digital content data. This feature then amounts to a secure "check-out" of copy once content.

### SUMMARY OF THE INVENTION

In one embodiment, the present invention discloses an apparatus and method for transferring digital content data. From a security perspective, it is important that only a single device possesses the key to the one valid copy. Thus, on the original secure move from the PVR, the content is re-encrypted before transfer. A portion of the key matching the now disabled PVR copy is also transferred, so that neither the PVR nor the reduced resolution device possess the complete key to that disabled content. When the secure move "back" to the PVR occurs, the only real need is to restore the missing portion of the key, and then delete the reduced resolution copy and its key. Afterwards, the recreated original content key is used to re-enable the digital content data in the PVR.

In a first aspect, the invention provides a method for transferring digital content data, as claimed in claim 1. In a further aspect, the invention provides an apparatus for transferring digital content data, as claimed in claim 8. Further aspects of the invention are as claimed in the dependent claims.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
FIG. 1 depicts a block diagram of a system for facilitating the transfer of digital content over a communications network in accordance with the present invention;
FIG. 2 depicts a method for transferring digital content in accordance with the present invention;
FIG. 3 depicts a method for re-enabling digital content in accordance with the present invention; and
FIG. 4 is a block diagram depicting an exemplary embodiment of a computer suitable for implementing the processes and methods described herein.

To facilitate understanding, identical reference numerals have been used, wherever possible, to designate identical elements that are common to the figures.

### DETAILED DESCRIPTION

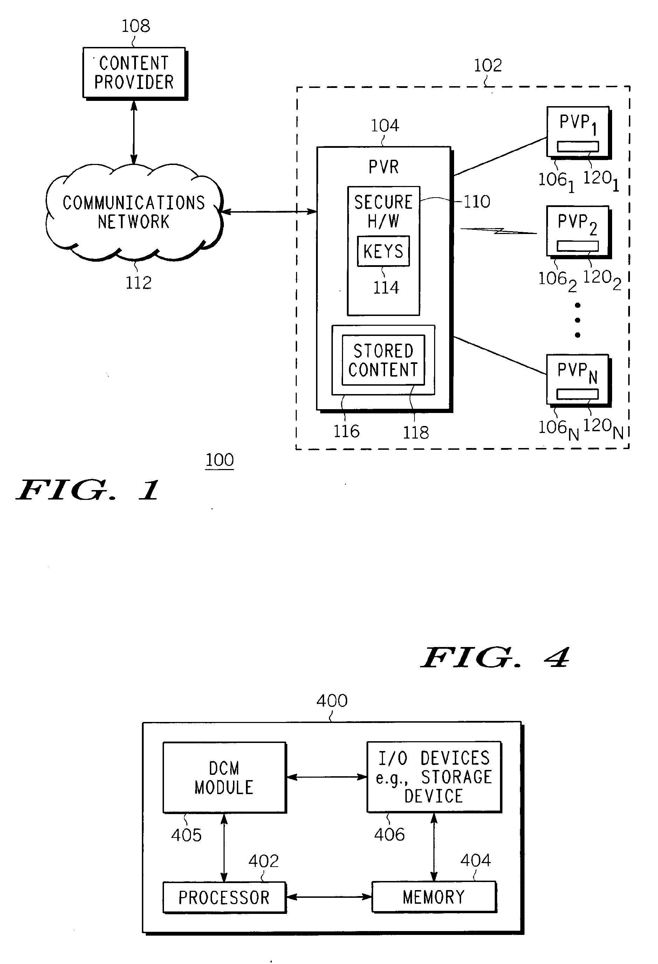

FIG. 1 is a block diagram of a content distribution system 100 (e.g., a cable system or an Internet Protocol rights management (IPRM) system) that utilizes a conditional access system (e.g. MediaCipher™) or an authenticated key management protocol (e.g., MOTOROLA ESBroker™ protocol) to facilitate the secure transfer of digital rights and content. In one embodiment, the system 100 comprises a content provider 108 (e.g., a broadcast source or a streaming server), a communications network 112 (e.g., a cable network or the Internet), and a local network 102. Although only one content provider 108 and one local network 102 are depicted, those skilled in the art realize that any number of content providers or local networks may be included in the system 100.

The local network 102 may comprise a home network that includes a personal video recorder (PVR) 104 and a plurality of portable video player (PVP) devices 106_{1...N}. Each of the devices 106_{1...N} may comprise a cellular phone, a portable laptop computer, a personal digital assistant (PDA), or any like device with a screen display. The PVR 104 is typically a single device (e.g., a set top box (STB), a digital video recorder (DVR), a personal computer (PC), etc.) that may function as a media gateway or hub for the local network 102. In addition, the PVR 104 may be configured to transfer stored digital content data 112 and content keys to the devices 106_{1...N}. Similarly, the PVR 104 may also receive content keys from the devices 106_{1...N}. Depending on the embodiment or the type of devices, the PVR 104 and the PVP devices 106_{1...N} may communicate and transfer digital content data over a physical medium, such as a memory card or a wired connection. Similarly, the communication between the PVR 104 and devices may also be conducted via a wireless connection such as infrared, BLUETOOTH, 802.11, or other like technology.

The PVR 104 comprises both a disk storage area 116 and a secure storage area 110. The disk storage area 116 may comprise a hard disk, a memory cache, or like component that contains the stored encrypted digital content data 118 (e.g., subscription television content, pay-per-view content, etc.). The secure storage area 110 may comprise a secure smart chip or the like, which cannot be accessed by the host device, or a specially encrypted portion of a non-volatile memory. The original content keys 114 (e.g., content decryption keys) are stored in the secure storage area 110.

The content provider 108 may comprise a cable headend that broadcasts digital content data (e.g., television programs). In one embodiment, the content provider 108 distributes digital content utilizing a conditional access system, and the PVR 104 receives, decrypts, and then subsequently re-encrypts and stores that content in its hard disk.

In one embodiment of the present invention, a PVR device 104 is used to transfer stored digital content data 118 to a requesting PVP 106. Initially, the PVR 104 receives a request for stored digital content 118 from a PVP 106 (e.g., the PVR user's cellular phone). The requested digital content data 118 stored on the PVR 104, however, may be restricted so that only a certain number of copies may be permitted to exist. For example, the stored digital content 118 may be characterized as having a "copy once" permission where only one usable copy of the content may exist (e.g., either on the PVR 104 or a PVP 106) at any given time. Consequently, the present invention may be used to "disable" or delete the content key associated with the digital content 118 stored on the PVR 104 so that it will not be accessible during the time the digital content is being utilized by the requesting PVP 106 device. By disabling the content key of the stored digital content 118, the PVR 104 is also permitted to retain the present version of the digital content data, which may be of higher quality than the version that is to be transferred to the PVP 106. For example, a PVR 104 may contain video that is encoded in a high definition (HD) format. When the PVR 104 receives a request for the video from a PVP 106, the PVR 104 transcodes the movie content into a format (i.e., an instance or version) that can be viewed by the PVP 106 (e.g., SD, CIF, and the like). Specifically, the new compatible format is a downgraded version (as compared to the original version) so that the resolution requirements of the PVP 106 may be met. Therefore, instead of permanently removing the original digital content 118 from the PVR 104 in order to adhere to the "copy once" restriction, the associated content key may be "disabled" or partially deleted so that the original content 118 cannot be viewed by the PVR 104. The same approach applies when the original content resolution is acceptable for the PVP 106, but the content is transcoded to a lower bit rate, that is, a lower quality, so as to reduce the amount of storage required at the PVP 106.

Before the original content key is disabled or deleted, a new content key is created to encrypt the transcoded version of the original digital content 118. In one embodiment, the new content key comprises a portion of the original content key. For example, the new content key may utilize a "generator seed" of the original content key, thereby effectively disabling the original content key (since only a "partial" original content key remains). Specifically, the original content key is disabled by transferring "half" of the key to the destination PVP 106 device as part of a new content key. In one embodiment, the PVR 104 may initially generate a plurality of randomly generated "seeds", e.g., S1, S2, and S3, during a key generation process. The original content key may be generated from two of the seeds (e.g., S1 and S2), for example, by processing the two seeds through a one-way cryptographic function. Alternatively, the content key may be created by combining the two seeds using a simpler function. In the event of a digital content transfer, a new content key may be derived by using one of the seeds (e.g., S2) that is used to create the original content key along with an originally "unused" seed (e.g., S3). For example, a one way function can be employed on the two "generator" seeds (e.g., S2 and S3) to generate the new content key. After encrypting the new version of the content with the new key, the new content key, as well as S2, is subsequently provided to the PVP 106, and the original content key is deleted in the PVR. Transferring S2 but not S1 ensures that neither the PVR nor the PVP can generate the original key. Subsequently, returning S2 securely to the PVR re-enables its content. Equivalently, instead of transferring the new key and S2 to the PVP, S2 and S3 can be transferred, and the PVP can recreate the new key by using the same generator function as used in the PVR.

After the transcoded digital content is securely moved to the requesting PVP 106, the content must retain a unique identity in order to facilitate the eventual transfer back to the PVR 104. If the original content key has been completely or partially deleted from the PVR 104 during the process of moving the digital content to the PVP device 106, then the identifier itself does not need to be secured. Notably, the content's intrinsic protection is that the associated key only provides value to a user if the identifier is not altered. If the original key had not been deleted or partially deleted from the PVR 104, but instead only disabled with the expectation of eventual re-use, then the identifier would have to be protected securely (e.g., with a secure protocol) so that the digital content is always matched to the corresponding identifier.

For example, in one embodiment, the PVR 104 is configured to reconstruct the original content key after receiving back the relevant information from the PVP 106. Notably, the PVR 104 acquires the same seed (e.g. S2) that was used in creating the original key, as well as having the PVP remove its stored copy of the new content key and also S2. Consequently, the full-quality copy of the "disabled" digital content will be accessible after the original content key is reconstructed.

In the event the digital content needs to be reinstated to the PVR 104 from the PVP device 106 (presumably after viewing), the encrypted digital content stored on the PVP 106 is not electronically transferred back to the PVR 104. Typically, the digital content utilized by the PVP 106 is in a lower resolution or lower quality format as compared to format of the original digital content stored on the PVR 104. Thus, there is no reason to expend the time and resources that are needed to securely move the inferior digital content back to the PVR device 104 since the original digital content is already stored in a "disabled" format (i.e., the content is still present, but the content keys needed to decrypt the content are disabled). Therefore, the action of "moving back" content is actually the transfer back of the PVP's content key seeds (or at least the portion S2 that was removed from the PVR) to indicate the user's intention of disabling/deleting the content on the external device, and reenabling it on the PVR 104 in its full quality version. The PVP should not retain a copy of S2 nor the key generated from S2 and S3.

Alternatively, one way to implement such a "re-enable" function is to send back both S2 and S3, (or equivalently, S2 and the new content key) and have the PVR 104 security subsystem check S3 or the new content key using its prior copy of S3. In any case, once the secure transfer back is completed, the PVR 104 can re-enable its high quality stored content and make it available to the PVR 104 user. In another embodiment, the PVR 104 may be configured to save a hash value of the original content key for later validation purposes. Namely, a validation/verification procedure may be conducted after the original content key is reconstructed by comparing the original content key hash value to the reconstructed content key hash value. If the respective hash values are identical, then the reconstructed content key is validated.

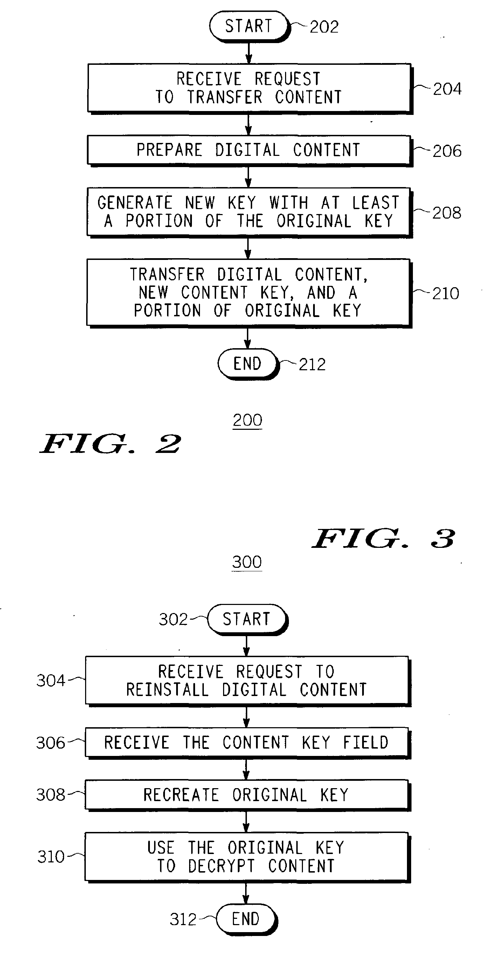

FIG. 2 illustrates a method 200 for reserving digital rights data in accordance with the present invention. The method 200 begins at step 202 and proceeds to step 204, where a request to transfer digital content is received. In one embodiment, a PVP 106 (e.g., a cellular phone with a screen display) is used to transmit a transfer request to a PVR 104. The transfer request may be completed by utilizing a wireless means, made over some type of physical connection, or using some type of physical component (e.g., a memory card).

At step 206, the requested digital content is prepared for transfer. In one embodiment, the PVR 104 identifies the type of device requesting the content and prepares the digital content for compatibility. For example, the PVR 104 transcodes the digital content data (e.g., HD to SD) into a format that is more appropriate to the PVP 106.

At step 208, a new content key for the transcoded content is generated. In one embodiment, a new content key for the requested digital content is created by acquiring a generator portion (i.e., a generator seed) of the original content key and incorporating it as a portion of the new content key. Namely, the new content key for the requested digital content data is formed by merging the generator portion of the original key along with a second content key "portion" (e.g., using seeds as mentioned above). Step 208 includes the encryption of the transcoded content by the PVR 104.

At step 210, the requested digital content data, the new content key, and a generator seed (e.g., S2) of the original key are transferred. In one embodiment, the requested digital content data and corresponding content keys are securely transferred to the requesting PVP 106. In one embodiment, step 210 effectively disables the original content key stored in the PVR 104, as a portion of that key, or one of its generators, no longer exists in the PVR. The secure transfer of the digital content and keys may comprise any method that is known in the art (e.g., MOTOROLA ESBroker™ protocol, or a Diffie Hellman based protocol). In another embodiment, seeds S2 and S3 are transferred to the PVP 106, which subsequently uses S2 and S3 to reconstruct the new content key. The method 200 then ends at step 212.

FIG. 3 illustrates a method 300 for re-enabling digital content data in accordance with the present invention. The method 300 begins at step 302 and proceeds to step 304, where a request to transfer digital content from a PVP 106 is received. In one embodiment, a PVR 104 receives a request from the PVP 106 to "return" the digital content back to the PVR 104.

At step 306, a content key field is received by PVR 104 over a secure protocol. In one embodiment, the content key field contains two portions. One portion of the content key field constitutes a part (e.g., the seed S2) of the original content key that was produced in step 208 of method 200 and is needed to decrypt the digital content data stored on the PVR 104. The other portion is the content key (or equivalently, S3) that was utilized to decrypt the transcoded digital content data initially provided to the PVP 106 (see method 200). In another embodiment, the PVR 104 may be configured to save a hash value of the original content key for later validation purposes. Namely, a validation/verification procedure may be conducted after the original content key is reconstructed by comparing the original content key hash value to the reconstructed content key hash value. If the respective hash values are identical, then the reconstructed content key is validated.

At step 308, the original content key is recreated. In one embodiment, the PVR 104 reconstructs the original content key by merging the remaining stored portion from the original content key (i.e., the "non-extracted" portion) and the recently obtained content key portion (from step 306).

At step 310, the original content key is used to re-enable the previously stored digital content data. In one embodiment, the PVR 104 utilizes the recently reconstructed original content key to access the stored higher quality digital content data. The method 300 ends at step 312.

In one reduced security extended embodiment, a time limit functionality may be implemented in conjunction with the present invention. Notably, the secure hardware subsystems on both the PVR 104 and the external unit (e.g., PVP 106) may be configured to re-enable (in the PVR) and delete or disable (in the PVP) the digital content data at a common predefined time. Essentially, the secure move procedure described above would be implicitly accomplished in an automated pre-planned fashion. Therefore, the need for a user to physically bring a PVP back to the PVR for a digital content transfer would be unnecessary so long as the DRM system in use supports secure time on the PVR 104 and the PVP 106. This can only work if the PVR content disable process retains a local copy of the original key, or S2 parameter, hence the "reduced security." Thus for this extension feature, greater trust must be placed in the PVR secure hardware.

FIG. 4 depicts a high level block diagram of a PVR 104 or general purpose computer suitable for use in performing the functions described herein. As depicted in FIG. 4, the system 400 comprises a processor element 402 (e.g., a CPU), a memory 404, e.g., random access memory (RAM) and/or read only memory (ROM) and/or persistent memory (Flash), a digital content management module 405, and various input/output devices 406 (e.g., storage devices, including but not limited to, a tape drive, a floppy drive, a hard disk drive, a compact disk drive, a receiver, a transmitter, a speaker, a display, a speech synthesizer, an output port, and a user input device (such as a keyboard, a keypad, a mouse, etc.) and the like.

It should be noted that the present invention can be implemented in software and/or in a combination of software and hardware, e.g., using application specific integrated circuits (ASIC), a general purpose computer or any other hardware equivalents. In one embodiment, the digital content management module or process 405 can be loaded into memory 404 and executed securely by processor 402 to implement the functions as discussed above. As such, the present digital content management module 405 (including associated data structures) of the present invention can be stored securely on a computer readable medium or carrier, e.g., RAM memory, magnetic or optical drive or diskette and the like.

## Claims

1. A method for transferring digital content data, comprising:
transcoding original digital content data (118) stored in an encrypted state in a first device (104) to create a modified version of said original digital content data having a bitrate different than the original digital content;
encrypting said modified version with a new content key;
transferring said encrypted modified version and at least one content key generator to a second device (106), wherein said at least one content key generator is used to recreate the new content key for enabling said encrypted modified version at said second device (106), wherein an original content key (114) for the original digital content data is derived from the content key generator;
disabling said original digital content data stored in said first device (104) contemporaneously by deleting the content key generator from the first device (104); and
re-enabling said disabled original digital content data at said first device (104) and contemporaneously disabling said encrypted modified version at said second device (106) by moving the content key generator from the second device (106) back to the first device (104), and deleting, from said second device(106), said content key generator as well as said new content key generated from said content key generator.

2. The method of claim 1, wherein said original content key (114) is created by using a first content key generator and a second content key generator, and wherein said second content key generator is used in conjunction with a third content key generator to create said new content key for encrypting and enabling said encrypted modified version.

3. The method of claim 2, wherein the original digital content data (118) in said first device (104) is disabled by transferring said second content key generator to said second device (106), wherein said original digital content data (118) is re-enabled upon transferring said second content key generator back to said first device (104), and wherein said encrypted modified version is enabled on said second device (106) by transferring said second and third content key generators to said second device (106).

4. The method of claim 3, wherein said second device (106) cannot access said first content key generator which is securely stored in said first device (104).

5. The method of claim 2, wherein at least one of said original content key (114) or said new content key is generated using a one-way function.

6. The method of claim 1, wherein said disabled original digital content data includes a unique identifier that corresponds to said content key generator and said original digital content data (118).

7. The method of claim 1, wherein said re-enabling comprises:
re-enabling said disabled original digital content data in said first device (104) and disabling said transcoded version in said second device (106) after a predefined time period.

8. An apparatus for transferring digital content data, composing:
means for transcoding original digital content data (118) stored in an encrypted state in a first device (!04) to create a modified version of said original digital content data having a bitrate different than the original digital content (118);
means for encrypting said modified version with a new content key;
means for transferring said encrypted modified version and at least one content key generator to a second device (106), wherein said at least one content key generator is used to recreate the new content key for enabling said encrypted modified version at said second device (106), wherein an original content key for the original digital content data is derived from the content key generator;
means for disabling said original digital content data stored in said first device (104) contemporaneously by deleting the content key generator from the first device (104); and
means for re-enabling said disabled original digital content data at said first device (104) and contemporaneously disabling said encrypted modified version at said second device (106) by moving the content key generator from the second device (106) back to the first device (104) and deleting, from said second device(106), said content key generator as well as said new content key generated from said content key generator.

## Patentansprüche

1. Verfahren zum Übertragen von digitalen Inhaltsdaten, umfassend:
Umschlüsseln von ursprünglichen digitalen Inhaltsdaten (118), die in einem verschlüsselten Zustand in einer ersten Vorrichtung (104) gespeichert sind, um eine geänderte Version der ursprünglichen digitalen Inhaltsdaten zu erzeugen, die eine andere Bitrate haben, als der ursprüngliche digitale Inhalt;
Verschlüsseln der geänderten Version mit einem neuen Inhaltsschlüssel;
Übertragen der verschlüsselten geänderten Version und zumindest einem Inhaltsschlüsselgenerator zu einer zweiten Vorrichtung (106), wobei der zumindest eine Inhaltsschlüssel zum Wiedererzeugen des neuen Inhaltsschlüssels benutzt wird, um die verschlüsselte geänderte Version bei der zweiten Vorrichtung (106) freizugeben, wobei ein ursprünglicher Inhaltsschlüssel (114) für die ursprünglichen digitalen Inhaltsdaten von dem Inhaltsschlüsselgenerator stammt;
zeitgleiches Sperren der ursprünglichen digitalen Inhaltsdaten, die in der ersten Vorrichtung (104) gespeichert sind, durch Löschen des Inhaltsschlüsselgenerators von der ersten Vorrichtung (104); und
Wiederfreigeben der gesperrten ursprünglichen digitalen Inhaltsdaten bei der ersten Vorrichtung (104) und zeitgleiches Sperren der verschlüsselten geänderten Version bei der zweiten Vorrichtung (106), durch Bewegen des Inhaltsschlüsselgenerators von der zweiten Vorrichtung (106) zurück zu der ersten Vorrichtung (104),
und Löschen des Inhaltsschlüsselgenerators sowie des neuen Inhaltsschlüssels, der von dem Inhaltsschlüsselgenerator generiert wurde, von der zweiten Vorrichtung (106).

2. Verfahren nach Anspruch 1, wobei der ursprüngliche Inhaltsschlüssel (114) durch Benutzen eines ersten Inhaltsschlüsselgenerators und eines zweiten Inhaltsschlüsselgenerators erzeugt wird, und wobei der zweite Inhaltsschlüsselgenerator in Verbindung mit einem dritten Inhaltsschlüsselgenerator benutzt wird, um den neuen Inhaltsschlüssel zum Verschlüsseln und Freigeben der verschlüsselten modifizierten Version zu erzeugen.

3. Verfahren nach Anspruch 2, wobei die ursprünglichen digitalen Inhaltsdaten (118) in der ersten Vorrichtung (104) gesperrt werden, indem der der zweite Inhaltsschlüsselgenerator zu der zweiten Vorrichtung (106) übertragen wird, wobei die ursprünglichen digitalen Inhaltsdaten (118) nach dem Übertragen des zweiten Inhaltsschlüsselgenerators zurück zu der ersten Vorrichtung (104) wieder freigegeben werden, und wobei die verschlüsselte modifizierte Version durch das Übertragen des zweiten und dritten Inhaltsschlüsselgenerators zu der zweiten Vorrichtung (106) auf der zweiten Vorrichtung (106) frei gegeben werden.

4. Verfahren nach Anspruch 3, wobei die zweite Vorrichtung (106) nicht auf den ersten Inhaltsschlüsselgenerator zugreifen kann, der sicher in der ersten Vorrichtung (104) gespeichert ist.

5. Verfahren nach Anspruch 2, wobei zumindest einer der ursprünglichen Inhaltsschlüssel (114) oder der neue Inhaltsschlüssel durch das Benutzen einer Einwegfunktion generiert wird.

6. Verfahren nach Anspruch 1, wobei die gesperrten ursprünglichen digitalen Inhaltsdaten eine einzigartige Kennung beinhalten, die den Inhaltsschlüsselgenerator und den originalen digitalen Inhaltsdaten (118) entspricht.

7. Verfahren nach Anspruch 1, wobei das Wiederfreigeben umfasst:
Wiederfreigeben der gesperrten ursprünglichen digitalen Inhaltsdaten in der ersten Vorrichtung (104) und Sperren der umgeschlüsselten Version in der zweiten Vorrichtung (106) nach einem vorher festgelegten Zeitraum.

8. Einrichtung zum Übertragen von digitalen Inhaltsdaten umfassend:
Mittel zum Umschlüsseln von ursprünglichen digitalen Inhaltsdaten (118), die in einem verschlüsselten Zustand in einer ersten Vorrichtung (104) zum Erzeugen einer geänderten Version der ursprünglichen digitalen Inhaltsdaten gespeichert wird, die eine andere Bitrate haben als der ursprüngliche digitale Inhalt (118);
Mittel zum Verschlüsseln der geänderten Version mit einem neuen Inhaltsschlüssel;
Mittel zum Übertragen der verschlüsselten geänderten Version und zumindest einem Inhaltsschlüsselgenerator zu einer zweiten Vorrichtung (106), wobei der zumindest eine Inhaltsschlüsselgenerator zum Wiedererzeugen des neuen Inhaltsschlüssels benutzt wird, um die verschlüsselte geänderte Version bei der zweiten Vorrichtung (106) freizugeben, wobei ein ursprünglicher Inhaltsschlüssel für die ursprünglichen digitalen Inhaltsdaten von dem Inhaltsschlüsselgenerator abstammt;
Mittel zum zeitgleichen Sperren der ursprünglichen digitalen Inhaltsdaten, die in der ersten Vorrichtung (104) gespeichert sind, durch das Löschen des Inhaltsschlüsselgenerators von der ersten Vorrichtung (104); und
Mittel zum Wiederfreigeben der gesperrten ursprünglichen digitalen Inhaltsdaten bei der ersten Vorrichtung (104) und zeitgleiches Sperren der verschlüsselten geänderten Version bei der zweiten Vorrichtung (106) durch das Bewegen des Inhaltsschlüsselgenerators von der zweiten Vorrichtung (106) zurück zu der ersten Vorrichtung (104), und
Löschen des Inhaltsschlüsselgenerators sowie des neuen Inhaltsschlüssels, der von dem Inhaltsschlüsselgenerator generiert wurde, von der zweiten Vorrichtung (106).

## Revendications

1. Un procédé pour transférer des données de contenu numérique, comprenant :
transcoder des données originales de contenu numérique (118) stockées dans un état chiffré dans un premier dispositif (104) pour créer une version modifiée desdites données originales de contenu numérique ayant un débit binaire différent du contenu numérique original ;
chiffrer ladite version modifiée avec une nouvelle clé de contenu ;
transférer ladite version modifiée chiffrée et au moins un générateur de clé de contenu à un deuxième dispositif (106),
dans lequel ledit au moins un générateur de clé de contenu est utilisé pour récréer la nouvelle clé de contenu pour activer ladite version chiffrée audit deuxième dispositif (106), dans lequel une clé de contenu originale (114) pour les données originales de contenu numérique est dérivée du générateur de clé de contenu ;
désactiver simultanément lesdites données originales de contenu numérique stockées dans le premier dispositif (104) en effaçant le générateur de clé de contenu du premier dispositif (104) ; et
réactiver lesdites données originales de contenu numérique audit premier dispositif (104) et simultanément désactiver ladite version modifiée chiffrée audit deuxième dispositif (106) en retournant le générateur de clé de contenu du deuxième dispositif (106) au premier dispositif (104), et
effacer, dudit deuxième dispositif (106), ledit générateur de clé de contenu tout comme ladite nouvelle clé de contenu générée dudit générateur de clé de contenu.

2. Le procédé selon la revendication 1, dans lequel ladite clé de contenu originale (114) est crée en utilisant un premier générateur de clé de contenu et un deuxième générateur de clé de contenu, et dans lequel ledit deuxième générateur de clé de contenu est utilisé ensemble avec un troisième générateur de clé de contenu pour créer ladite nouvelle clé de contenu pour chiffrer et activer ladite version modifiée chiffrée.

3. Le procédé selon la revendication 2, dans lequel les données originales de contenu numérique (118) dans ledit premier dispositif (104) sont désactivées en transférant ledit deuxième générateur de clé de contenu audit deuxième dispositif (104), dans lequel lesdites données originales de contenu numérique (118) sont réactivées en retournant ledit deuxième générateur de clé de contenu audit premier dispositif (104), et dans lequel ladite version modifiée chiffrée est activée audit deuxième dispositif (106) en transférant lesdits deuxième et troisième générateurs de clé de contenu audit troisième dispositif (106).

4. Le procédé selon la revendication 3, dans lequel ledit deuxième dispositif (106) ne peut pas accéder au premier générateur de clé de contenu qui est stocké de façon sécurisée dans le premier dispositif (104).

5. Le procédé selon la revendication 2, dans lequel au moins une desdites clés de contenu originales (114) ou ladite nouvelle clé de contenu est générée en utilisant une fonction à sens unique.

6. Le procédé selon la revendication 1, dans lequel lesdites données originales de contenu numérique désactivées incluent un identifiant unique qui correspond audit générateur de clé de contenu et auxdites données originales de contenu numérique (118).

7. Le procédé selon la revendication 1, dans lequel réactiver comprend :
réactiver lesdites données originales de contenu numérique désactivées dans ledit premier dispositif (104) et désactiver ladite version transcodée dans ledit deuxième dispositif (106) après un délai prédéfini.

8. Un dispositif pour transférer des données de contenu numérique, comprenant :
des moyens pour transcoder des données originales de contenu numérique (118) stockées dans un état chiffré dans un premier dispositif (104) pour créer une version modifiée desdites données originales de contenu numérique ayant un débit binaire différent du contenu numérique original (118) ;
des moyens pour chiffrer ladite version modifiée avec une nouvelle clé de contenu ;
des moyens pour transférer ladite version modifiée chiffrée et au moins un générateur de clé de contenu à un deuxième dispositif (106), dans lequel ledit au moins un générateur de clé de contenu est utilisé pour récréer la nouvelle clé de contenu pour activer ladite version modifiée chiffrée audit deuxième dispositif (106), dans lequel une clé de contenu originale pour le contenu numérique original est dérivée du générateur de clé de contenu ;
des moyens pour désactiver lesdites données originales de contenu numérique stockées dans ledit premier dispositif (104) simultanément en effaçant le générateur de clé de contenu du premier dispositif (104) ; et
des moyens pour réactiver lesdites données originales de contenu numérique désactivées audit premier dispositif (104) et simultanément désactiver ladite version modifiée chiffrée audit deuxième dispositif (106) en retournant le générateur de clé de contenu du deuxième dispositif (106) au premier dispositif (104), et
effacer, dudit deuxième dispositif (106), ledit générateur de clé de contenu tout comme ladite nouvelle clé de contenu générée par ledit générateur de clé de contenu.
